(19) Europäisches Patentamt
European Patent Office
Office européen des brevets

(11) **EP 4 564 443 A1**

(12) **EUROPEAN PATENT APPLICATION**

(43) Date of publication:
**04.06.2025 Bulletin 2025/23**

(21) Application number: **24211046.8**

(22) Date of filing: **06.11.2024**

(51) International Patent Classification (IPC):
*H01M 4/04* (2006.01)    *B21B 37/32* (2006.01)
*B21B 38/04* (2006.01)    *B21B 27/10* (2006.01)

(52) Cooperative Patent Classification (CPC):
**H01M 4/0435; B21B 27/106; H01M 4/0404;**
**H01M 4/0409**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **07.11.2023 US 202318387606**

(71) Applicant: **Honeywell International Inc.**
**Charlotte, NC 28202 (US)**

(72) Inventors:
• **FORBES, Michael**
  **Charlotte, 28202 (US)**
• **HUGHES, Michael**
  **Charlotte, 28202 (US)**

(74) Representative: **Haseltine Lake Kempner LLP**
**Cheapside House**
**138 Cheapside**
**London EC2V 6BJ (GB)**

(54) **BATTERY ELECTRODE MANUFACTURING ADVANCED CALENDER MEASUREMENT AND CONTROL**

(57) Calender measurement and control system, for fabricating electrode sheets (122, 124) for lithium-ion batteries to an apparatus, includes: dual rotating rolls (126, 128) through which the sheet (122, 124) travels, heating elements (inductive coils) positioned along the length of one or both of rotating rolls (126, 128), and means for controlling the intensity of the heating in a rotating roll(s) along the length of the rotating roll(s) where the heating is applied. The diameter of the heated rotating roll (126, 128) expands in response to the heat thereby regulating the thickness of the electrode . Controller input includes operating point data comprising electrode material composition, electrode coating weight, maximum electrode coat density, initial electrode coat thickness, temperature of one or both of the rotating rollers (126, 128) incorporating a heating element, and line load. The controller can be tuned whereby the process gain from line load to final thickness is automatically calculated at a specified operating point defined by the operating point data.

*FIG. 1*

**Description**

**FIELD OF THE INVENTION**

The present invention generally relates to manufacturing electrochemical batteries and more particularly to automatic calender control in the production of continuous electrode sheets that exhibit improved uniform thickness.

**BACKGROUND OF THE INVENTION**

A lithium-ion cell is one type of secondary battery and contains four main parts: a positive electrode (a cathode), a negative electrode (an anode), a separator that is placed between the electrodes to prevent contact and shorting, and an electrolyte. Examples of a cathode active material may include but are not limited to: mixed-metal oxides, metal phosphates, or related materials. Examples of anode materials may include but are not limited to: graphite, silicon, or composites thereof. The electrolyte provides transport of the ions, and may be a liquid such as $LiPF_6$, or a solid. Battery manufacture begins with the fabrication of large sheets of double-side coated anode copper substrates and double- side coated cathode aluminum substrates. The electrodes are manufactured on a continuous roll-to-roll process where pre-mixed anode or cathode material is coated onto a sheet of metal substrate, which functions as current collectors. The electrodes undergo a calendering or pressing process before the electrode sheets are slit into appropriate-sized double-side coated metal substrates for assembly into batteries.

To achieve and maintain the quality of continuous, roll-to-roll production of electrodes, there must be constant, online measurements of quality factors that are strongly linked to battery performance. Weight is most directly correlated to the quantity of the active particles, therefore uniform weight per unit area (areal weight) is a fundamental requirement for high quality electrodes. Likewise, caliper or thickness of the coating layer must be kept uniformly at a target value to ensure good electrochemical performance of the finished batteries and to ensure that the layered electrodes fit into the cell container. Currently, calender control is typically executed manually, or by simple adjustment of the roll gap based on end point measurements. These methods of caliper adjustment have various shortcomings and do not account for many factors that contribute to electrode uniformity and performance.

With present control techniques, the calender rolls do not compress evenly across the electrode sheet. There is no accounting for the effects of short-term spring back and long-term spring back on the electrode material. Sheet temperature can vary and can affect the measurements and coating compressibility. Electrode compositions can change and different parameters are required. Finally, compression without considering its effects on the structural properties of the electrode material can produce defective electrodes. These problems will become even more prevalent as sheet widths get wider. In addition, as facilities become larger incorporating more assembly lines, maintaining a multitude of non-automated pressing stations becomes even more difficult.

**SUMMARY OF THE INVENTION**

The present invention is based, in part, on the development of a calender measurement and control system for fabricating electrode sheets for lithium-ion batteries. The system results in production of anode and cathode electrodes with more uniform properties such that the coating is compressed for improved energy density while preserving adequate porosity to maintain good ionic conductivity. At the same time, the compression provides improved pathways for electronic conductivity. With the present invention, electrode manufacturers can optimize production by running closer to specification targets.

In one aspect, the invention is directed to an apparatus, for controlling the thickness of an electrode material layer on a moving sheet of electrode which includes a metal substrate that is coated on at least one side with an electrode material layer, that includes:

means for passing the sheet of electrode which is moving in a machine direction (MD) through a gap which is formed by a first rotating roll and a second rotating roll;
means for heating the first rotating roll at a selected position along the length of the first rotating roll wherein a plurality of first heating elements is positioned along the length of the first rotating roll; and
means for controlling the intensity of the heating in the first rotating roll and the position along the length of the first rotating roll where the heating is applied.

In a preferred embodiment, the heating elements comprise inductive coils. The diameter of the heated rotating roll expands in response to the heat thereby regulating the thickness of the electrode.

In another aspect, the invention is directed to a controller for controlling the thickness of an electrode material layer on a moving sheet of electrode which includes a metal substrate that is coated on at least one side with an electrode material layer exiting a calender having a first rotating roller and a second rotating roller which define a gap through which the sheet of electrode passes, wherein at least one of the first rotating roller or the second rotating roller has a heating element that is positioned along its length, the controller includes:

(a) processor;

(b) means for measuring the temperature of at least one of the first rotating roller or the second rotating roller that has a heating element;

(c) means for determining the line load applied by the calender;

(d) means for heating at a selected position along the length of at least one of the first rotating roller or the second rotating roller to heat at the first rotating roller or the second rotating roller to regulate its diameter;

(e) a memory device coupled to the processor and comprising a readable program for execution by the processor to:

(i) receive an input comprising the thickness of an electrode material layer exiting the calender;

(ii) receive an input comprising the temperature of at least one of the first rotating roller or the second rotating roller that has a heating element (such as an induction coil);

(iii) receive an input comprising the line load applied by the calender;

(iv) process a model of the calender; and

(v) provide an output coupled to control application of the heat along the length of at least one of the first rotating roller or the second rotating roller that has a heating element.

In a preferred embodiment, the controller input further includes operating point data comprising electrode material composition, electrode coating weight, maximum electrode coat density, initial electrode coat thickness, temperature of at least one of the first rotating roller or the second rotating roller that has a heating element, and line load.

The controller can be tuned whereby the process gain from line load to final thickness is automatically calculated at a specified operating point defined by the operating point data.

Plasticity is the capacity of a material to permanently change shape when forces are applied to it. During battery electrode calendering, the magnitude of forces applied to compress the electrode will cause some permanent coating compression. That is, the thickness of the coating after the press is less than the thickness of the coating before the press. In this context, it is useful to quantify the resistance to deformation instead of plasticity itself via a temperature dependent compaction factor which is a key parameter in an equation governing the relationship between load and final thickness in the pressing of coated electrodes. With the present invention, the line load to final thickness relationship is used to adjust controller tuning automatically as pressing conditions change. In particular, the gain from the line load to final coating thickness can be calculated from the measured process operating variables. The gain is used to update controller tuning and maintain good control of the pressing operation. As a result, time consuming tuning experiments and losses due to poor operations are avoided.

The present invention is particularly suited for quality control in the fabrication of electrodes for lithium-ion batteries where metal aluminum or copper foil from metal rolls is continuously coated with cathode active material or anode active material, respectively. The present technique provides manufacturers with quality measurement data at an early stage in the production process which affords better control of process conditions and reduces scrap rates.

## BRIEF DESCRIPTION OF THE DRAWINGS

FIG. 1 illustrates a battery electrode calendering process;
FIG. 2 is a plan view of a calender roll and heating system;
FIG. 3 depicts a roll-to-roll sheet production system for continuous coating of a metal substrate with anodic or cathodic materials; and
FIG. 4 illustrates a calendering system.

**DETAILED DESCRIPTION OF THE PREFERRED EMBODIMENTS**

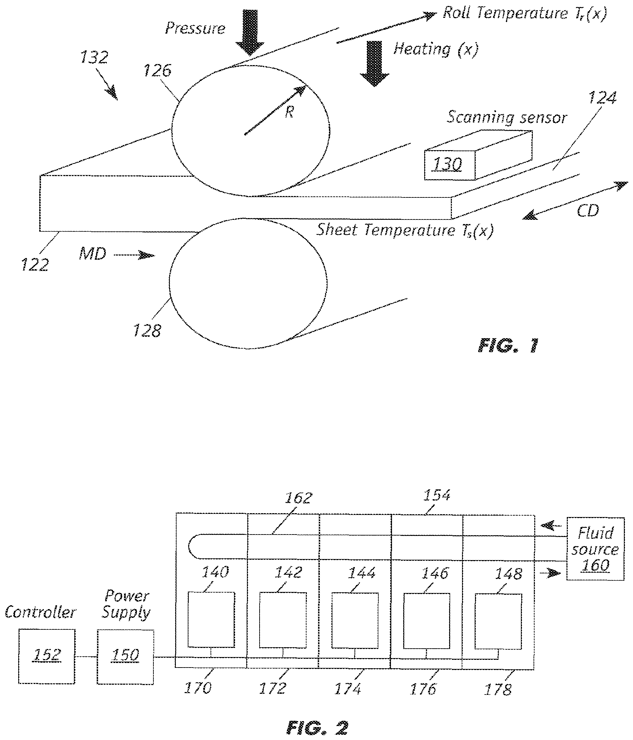

Fig. 1 illustrates a calender device 132 that includes an upper metal roll 126 and a lower metal roll 128 which defines a nip or controlled gap through which continuous sheet of electrode material 122 passes. The lengths and diameters of the two vertically mounted rolls are preferably the same. The electrode material comprises an anodic or cathodic material that may contain solvents. The electrode sheet 122 travels in the machine direction (MD) through the nip to roll the electrode sheet 122 into a compressed electrode sheet 124 of predetermined thickness. The cross direction (CD) of the traveling electrode sheet 122 is perpendicular to the MD. A scanning sensor 130 measures one or more properties along the CD of the compressed electrode sheet 124. The measured properties can include, for instance, sheet thickness and temperature. The scanning sensor 130 generates cross-directional measurement profiles. An entry scanning sensor (not shown) can also be positioned to measure one or more properties along the CD of electrode sheet 122 before the sheet enters the nip between rollers 126 and 128.

A feature of the present invention is that the exterior surface temperature of roll 126 along its CD can be controlled so that the temperature $T_r(x)$ can vary along the length of roll 126 and heating causes the roll 126 to expand, so the thickness of the cylinder increases with temperature. The increase in temperature required to obtain small changes in roll thickness is quite small. For instance, if the desired actuation, $\Delta t$, is 1 micron and if the roll is a 60 cm diameter stainless steel roll, and for simplicity assume that the co-efficient of linear expansion, CTE, is $10 \times 10^{-6}$ m/m·°C (this is at the lower end of possible values). Given that CTE = $\Delta t/R/\Delta T$, this implies a temperature change of only 0.3 degrees. This small number also highlights the requirement for roll temperature measurement and control. The lower roll 128 can also be heated to control its exterior surface temperature.

Fig 2 shows a technique for generating a temperature profile along the length of a roll that employs induction heating. The continuous roll 154, which fabricated of stainless steel or other electrically conductive material, is partitioned into a plurality of sections, zones, or regions 170, 172, 174, 176, and 178 along its length. The induction coils 140, 142, 144, 146 and 148, are placed adjacent to the zone 170, 172, 174, 176, and 178, respectively. A controller 152 regulates the power source 150 so that alternating current that drives each coil can be regulated. Multizone induction heating systems are described in U.S. Pat. No. 8,415,595 to Chirico, U S. Pat. No. 9,756,686 to Dohmeier et al. and U.S. Pat. No. 5,059,762 to Simcock, which are incorporated herein by reference. The outer diameter of each zone along the roll length can be controlled, with induction heating to create a profile of the calender roll diameter(s). Roll 154 can also be heated with thermal fluid from a heated fluid source 160 that circulates through channels 162 in the roll.

In one embodiment of the invention, roll induction heating is employed to control the electrode sheet caliper profile. Simultaneously, a thermal fluid roll heating controls the average roll or sheet temperature to a specific target. As both the induction heating and thermal fluid heating influence roll diameter, the nominal gap can be controlled via electro-hydraulic or other gap control devices.

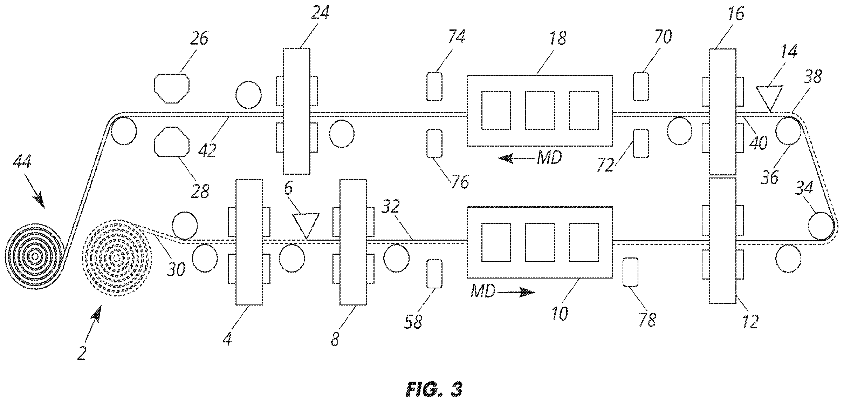

Fig. 3 illustrates a process for coating a metal web or sheet that is used in fabricating electrodes for lithium-ion electrochemical cells and batteries. For making anodes, the electrode coating includes anodic active materials such as graphite and, for making cathodes, the electrode coating includes cathodic active materials such as a lithium metal oxide. Electrodes include a current collector metal foil that is coated on both sides of the foil with electrode slurry which can also include carbon black, binder, and solvent. After the electrode slurry is applied on a side of foil, the wet coated foil is heated in a dryer to extract the solvent to leave a solid layer of electrode material which adheres to the metal foil. Copper foil is a preferred anode current collector material and aluminum foil is a preferred cathode current collector material.

As shown in Fig. 3, a roll 2 is unwound by an unwinder and supplies a continuous metal web or sheet 30 that is coated on a top surface with a layer of electrode slurry by a coater 6. The basis weight, thickness, and other characteristics of the metal web or sheet 30 from roll 2 are usually known; scanning beta gauges 4 and 8 are employed to measure, respectively, the basis weight and/or thickness before, and after, the electrode slurry is applied by the coater 6.

The coater 6, such as a slot die coater, includes actuators that control a slot die/doctor blade to regulate the amount of slurry that is extruded onto the sheet 30. A dryer 10 removes excess solvents and cures the slurry that is on a moving coated sheet 32 to form an electrode layer on the sheet. Imaging devices 58 and 78 capture surface images of the coated sheet 32 before and after the dryer 10. Each imaging device typically includes a camera and a light source that illuminates the surface of the coated sheet 32. The imaging device may be stationary or scanning. For a stationary device, the camera takes digital images of the surface of the coated sheet 32 across an entire width. The camera generates a series of images that may be superimposed to form a continuous image of the entire coated sheet 32.

A scanning beta gauge 12 measures the basis weight and/or thickness of the moving coated sheet 32 exiting the dryer 10 after the calender 54. Thereafter, rolling supports 34, 36 reverse the orientation of a moving sheet 38 so that the uncoated side is on top w hereupon a coater 14 applies a layer of electrode slurry on the top uncoated surface of a moving sheet 38. The basis weight and/or thickness of a double-side coated sheet 40 are then measured with a scanning beta gauge 16 before entering a dryer 18. Imaging devices 70 and 72 capture top and bottom surface images of the sheet before the dryer 18 while imaging devices 74 and 76 capture top and bottom surface images of the sheet after exiting the dryer 18.

Further downstream, a beta gauge that is housed together with an infrared temperature sensor in a scanning device 24 measures the basis weight and/or thickness and the temperature of the double-side coated sheet 42 as the scanning device 24 moves back and forth across the double-coated sheet 42. A rewinder takes up the double-side coated sheet 42 into roll 44. Surface defects on the top and bottom coatings are monitored by imaging devices 26, 28.

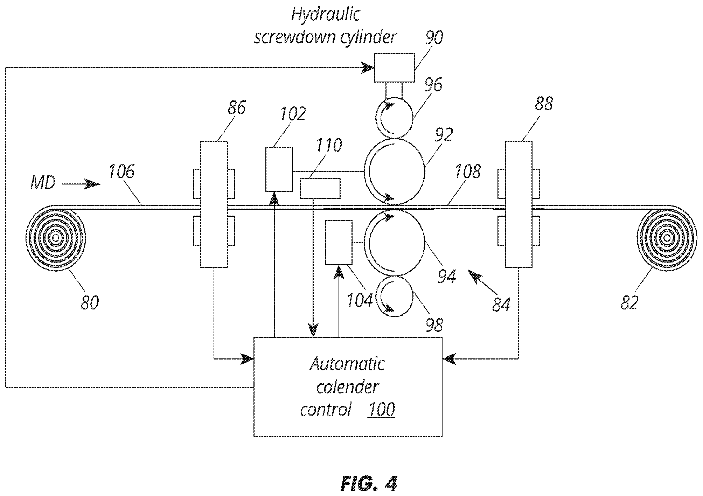

Fig. 4, shows a calendering process whereby the double-coated electrode layer 106 from electrode roll 80 passes through a calender system 84 which finishes and smooths the electrode layer 108. The calender system includes upper pressure roll 96, upper calender roll 92, lower calender roll 94 and lower pressure roll 98. The two calender rolls define a gap through **which** electrode layer 106 passes. Calender rolls 92 and 94 are each partitioned into a plurality of zones along its length and each zone is heated by a multizone induction heating mechanisms 102 and 104, respectively. Each calender roll can also be heated with the thermal fluid.

A gap positioning system, that includes upper and lower pressure rolls 96, 98, can vary the gap between the calender rolls. A pair of screwdown motors or hydraulic cylinders, each equipped with a screwdown or screw which clamps against opposite ends of pressure rolls 96, 98, respectively, apply roll force (pressure) to calender rolls 92, 94. An infrared thermal sensor 110 measures the temperature of heated calender roll 92 which provides an estimate of the surface temperature of the top electrode coating in the gap during compression. Since the radiative and convective heat losses from calendar roll will be relatively small, the infrared temperature measurements of the calender roll should provide a good estimate of the electrode coating temperature. Alternatively, a similar temperature measurement of the sheet can be taken as the sheet exits the calender roll. A similar infrared thermal sensor associated with calender roll 94 provides an estimate of the surface temperature of the lower electrode coating during compression.

Scanner sensors 98 and 88 measure various properties of the double-side coated sheet before and after being calendered. These properties include, for instance, basis weight of the sheet, basis weights of each coating, caliper of the sheet caliper of each coating. Scanning caliper gauges operating on the principles of optical and magnetic measurements can be employed. The finished electrode layer 108 is collected in finished electrode roll 82.

A quality control system that includes an automatic calender control 100, which includes a computer with memory and processor, receives signals from the various sensors whereby cross directional sheet property profiles for the double-side coated sheet before and after being calendered are generated and compared. Calender control strategies can be implemented that allow cross-directional control of material properties, as well as greater control over the average material properties by making use of the roll or sheet temperature measurement.

For instance, the caliper profiles of the upper and lower anode or cathode coatings can be determined. Thereafter, multizone induction heating mechanisms 102 and/or 104 are activated to adjust the temperatures and thus the diameters of the zones in calender rolls 92 and/or 94 along their lengths in order to form a compressed sheet with uniform caliper along the cross direction While roll induction heating is employed to control the caliper profile, simultaneously, thermal fluid as shown in Fig. 2, can circulate through the calender rolls to control the average roll or sheet temperature to a specific target. The nominal gap target will be selected to control the average, also known as machine direction, coating thickness. The average roll temperature setpoint will be chosen to provide optimal preservation of material structure, as determined by offline experimentation and modeling, or by feedback control based on conductivity or other available measurements.

The data from the sensors also enables the controller 100 to determine the plasticity of the compressed sheet which is employed to manage and control the calendering operation. Equation (1) characterizes how an electrode (anode or cathode) coating is permanently compressed for a given amount of force applied in the calendering process.

$$(\rho_M - \rho_C) = (\rho_M - \rho_{C,0}) \times e^{-q_L/\gamma_C}$$

**(1)**

Here $\rho_C$ is the density of the coating after the calender press, $\rho_{C,0}$ is the density of the coating before the calender press, $_{PM}$ is the maximum possible density for the coating, $q_L$ is the applied calender load, and $\gamma_C$ is the compaction resistance of the coating. The $\gamma_C$ is the reciprocal of a plastic deformability factor. Moreover, the coating density is a function of the mass loading (areal weight) Mc and the thickness of $\delta$.

$$\rho_C = \frac{M_C}{\delta_C}$$

**(2)**

Substituting (2) into (1) and rearranging gives:

$$\gamma_C = q_L \Big/ \ln\left(\frac{\rho_M - \frac{M_C}{\delta_{C,0}}}{\rho_M - \frac{M_C}{\delta_C}}\right)$$

$$(3)$$

The compaction resistance (reciprocal plasticity) 1s a function of both mass loading and temperature, taking the following form:

$$\gamma_C = (\mu_{0°C} - \xi T_R) \times M_C$$

$$(4)$$

Here $\mu_{0°C}$ is the compaction resistance mass loading coefficient at a temperature of 0 °C, $\xi$ is the slope of the temperature dependent mass loading coefficient, and $T_R$ is roll temperature in degrees Celsius. Therefore, with a small amount of data an operator can fit the parameters in a model for coating compression as a function of mass loading, temperature, and line load. Once these parameters have been obtained, that operator has a steady state model for coating thickness after pressing as a function of mass loading, initial thickness, line load, and roll temperature. Combining the above four equations and rearranging gives the following equation (5).

$$\delta_C = \frac{M_C}{\rho_M - \left(\rho_M - \frac{M_C}{\delta_{C,0}}\right) \times e^{-q_L/\left((\mu_{0°C} - \xi T_R)\times M_C\right)}}$$

$$(5)$$

In tuning model-based controllers such as model predictive control (MPC) or internal model control (IMC), and in model-based tuning methods for controllers (such as IMC-based tuning for proportional-integral derivative (PID) controllers), it is necessary to have a model of process behavior that includes the process gain. Process gain is the change in the value of the controlled variable that occurs as a result of a unit change in the value of the manipulated variable. In the case of controlling thickness by manipulating line load, the process gain, $k_{q\delta}$ is:

$$k_{q\delta} = \frac{\Delta \delta_C}{\Delta q_L}\bigg|$$

Equation (5) can be applied to calculate the gain by differentiation:

$$k_{q\delta} = \frac{\partial \delta_C}{\partial q_L}\bigg|$$

The derivative formulae are used to get an exact expression from equation (5) or numerical techniques can be used. Either way, the gain is obtained from line load to coat thickness for a set coat weight Mc, maximum coat density, $\rho_M$, initial thickness thickness $\delta_{C,0}$, compaction resistance mass loading coefficient at a temperature of 0 degrees Celsius $\mu_{0°C}$, slope of the temperature dependent mass loading coefficient $\xi$, roll temperature in degrees Celsius $T_R$.

All of these values can be directly measured or obtained from known material properties, except for $\mu_{0°C}$ and $\xi$, However, by obtaining pressing data for at least two different temperatures, the values for the two constants $\mu_{0°C}$ and $\xi$ can be derived from equations (3) and (4). Once these values are determined they may be used in equation (5) for all future operations that involve the same type of coating, that is, coatings with the same composition. This allows calculation of the process gain, $kq\delta$ for any operating point described by the set of variables $M_C$, $\rho_M$, $\delta_{C,0}$, $T_R$, and $q_L$.

Being able to calculate this process gain at any operating point simplifies the controller commissioning and maintenance. Instead of having to perform plant experiments to determine the process model gain and retune the controller for different grades (thicknesses) of electrode, this information can be calculated from equation (5).

Similarly, for a set grade of electrode, if process operations change (e.g., desired final thickness, or preferred pressing temperature), the load to thickness gain and controller tuning can be automatically updated based on equation (5).

Therefore, with the present invention, a controller can be programmed to regulate the thickness of a continuous sheet of electrode in a calender apparatus with dual rotating rolls, at least one of which has a heating element that is positioned along its length. A memory device is coupled to the processor which has a readable program for execution by the processor to: (i) receive an input of the thickness of an electrode material layer exiting the calender; (ii) receive an input of the temperature of at least one of the first rotating roller or the second rotating roller that has heating element; (iii) receive an input of the line load applied by the calender; (iv) process a model of the calender; and (v) provide an output coupled to control application of the heat along the length of at least one of the first rotating roller or the second rotating roller that has a heating element.

A feature of the present invention is that the controller can use a model-based control and/or model-based controller tuning wherein the gain from line load to final thickness can be automatically calculated at any given operating point defined by electrode composition, coating weight, maximum coat density, initial thickness, roll temperature and line load.

By automating the controller tuning process, commissioning time can be reduced, and quality can be held at a high level, avoiding losses due to poor quality, by ensuring that controls continue to operate well even as process operations change.

An algorithm to implement the control includes:

1. Obtaining process data, $\delta_C$, $M_C$, $\rho_M$, $\delta_{C,0}$, $T_R$, and $q_L$ for at least two different roll temperatures, and

2. Applying equations (3) an (4) calculate the compaction resistance parameters $\mu_{0°C}$ and $\varepsilon$. Once these are calculated automatic gain calculation is possible.

Automatic gain calculation and controller tuning include:

1. Ascertaining new process data set Mc, $\rho_M$, $\delta_{C,0}$, and $T_R$,

2. Using process data set plus previously determined parameters $\mu_{0°C}$ and $\varepsilon$ to calculate process gain from derivative of equation (5), and

3. Updating the process model used in model-based control or used for model- based controller tuning.

The controller continues to be well-tuned for different process operations ensuring good electrode product quality.

The foregoing has described the principles, preferred embodiments and modes of operation of the present invention. However, the invention should not be construed as being limited to the particular embodiments discussed. Thus, the above-described embodiments should be regarded as illustrative rather than restrictive, and it should be appreciated that variations may be made in those embodiments by workers skilled in the art without departing from the scope of the present invention as defined by the following claims.

**Claims**

1. An apparatus, for controlling the thickness of an electrode material layer on a moving sheet of electrode which includes a metal substrate that is coated on at least one side with an electrode material layer, that comprises:

   means for passing the sheet of electrode which is moving in a machine direction (MD) through a gap which is formed by a first rotating roll and a second rotating roll;
   means for heating the first rotating roll at a selected position along the length of the first rotating roll wherein a plurality of first heating elements is positioned along the length of the first rotating roll; and
   means for controlling the intensity of the heating in the first rotating roll and the position along the length of the first rotating roll where the heating is applied.

2. The apparatus of claim 1 wherein the means for heating the first rotating roll generates electric induction heating.

3. The apparatus of claim 1 comprising means for measuring the temperature of the first rotating roll along its length.

4. The apparatus of claim 1 further comprising:

   means for heating the second rotating roll at a selected position along the length of the second rotating roll wherein a plurality of second heating elements is positioned along the length of the second rotating roll; and
means for controlling the intensity of the heating in the second rotating roll and the position along the length of the second rotating roll where the heating is applied.

5. The apparatus of claim 4 wherein the means for heating the second rotating roll generates electric induction heating.

6. The apparatus of claim 4 comprising means for measuring the temperature of the second rotating roll along its length.

7. The apparatus of claim 4 wherein the metal substrate is coated on a first side with a first electrode material layer and on a second side with a second electrode material.

8. A method of controlling the thickness of a continuous sheet of electrode that moves in a machine direction (MD) wherein the sheet of electrode comprises a metal substrate that is coated on at least one side with an electrode material, which comprises:
advancing the sheet of electrode through a gap which is defined by a first rotating roller and a second rotating roller wherein a plurality of first heating elements is positioned along the length of the first rotating roller; and
applying heat at a selected position along the length of the first rotating roller to heat the first rotating roller to regulate its diameter.

9. The method of claim 8 wherein the first heating elements are electric induction heaters.

10. The method of claim 8 further comprising applying heat at a selected position along the length of the second rotating roller to heat the second rotating roller to regulate its diameter.

11. The method of claim 10 wherein the metal substrate is coated on a first side with a first electrode material layer and on a second side with a second electrode material.

12. The method of claim 10 wherein the second heating elements are electric induction heaters.

13. A controller for controlling the thickness of an electrode material layer on a moving sheet of electrode which includes a metal substrate that is coated on at least one side with an electrode material layer exiting a calender having a first rotating roller and a second rotating roller which define a gap through which the sheet of electrode passes, wherein at least one of the first rotating roller or the second rotating roller has a heating element that is positioned along its length, comprising:

(a) processor;
(b) means for measuring the temperature of at least one of the first rotating roller or the second rotating roller that has a heating element;
(c) means for determining the line load applied by the calender;
(d) means for heating at a selected position along the length of at least one of the first rotating roller or the second rotating roller to heat at the first rotating roller or the second rotating roller to regulate its diameter;
(e) a memory device coupled to the processor and comprising a readable program for execution by the processor to:

(i) receive an input comprising the thickness of an electrode material layer exiting the calender;
(ii) receive an input comprising the temperature of at least one of the first rotating roller or the second rotating roller that has a heating element;
(iii) receive an input comprising the line load applied by the calender;
(iv) process a model of the calender; and
(v) provide an output coupled to control application of the heat along the length of at least one of the first rotating roller or the second rotating roller that has a heating element.

14. The controller of claim 13 wherein the input further includes operating point data comprising electrode material composition, electrode coating weight, maximum electrode coat density, initial electrode coat thickness, temperature of at least one of the first rotating roller or the second rotating roller that has a heating element, and line load.

15. The controller of claim 13 wherein the controller is tuned whereby the process gain from line load to final thickness is automatically calculated at a specified operating point defined by the operating point data.

Pressure

Roll Temperature $T_r(x)$

Heating $(x)$

132

126

R

Scanning sensor

124

130

Sheet Temperature $T_s(x)$

CD

122

MD →

128

**FIG. 1**

162

154

Fluid source

160

140  142  144  146  148

Controller

Power Supply

152  150

170  172  174  176  178

**FIG. 2**

FIG. 3

*Hydraulic screwdown cylinder*

**FIG. 4**

Automatic calender control  100

# EUROPEAN SEARCH REPORT

Europäisches
Patentamt
European
Patent Office
Office européen
des brevets

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 4 032 628 A1 (SPEIRA GMBH [DE]) 27 July 2022 (2022-07-27) | 1,2,4,5, 7,9,12 | INV. H01M4/04 |
| Y | * paragraph [0069]; figures 1-5 * | 3,6 | |
| | ----- | | ADD. |
| X | JP H05 192703 A (ISHIKAWAJIMA HARIMA HEAVY IND) 3 August 1993 (1993-08-03) | 13-15 | B21B37/32 B21B38/04 |
| Y | * paragraph [0020]; claim 1; figure 3 * | 3,6 | B21B27/10 |
| | ----- | | |
| X | DE 27 43 130 A1 (VOEST AG) 29 June 1978 (1978-06-29) * page 6, last paragraph - page 7, paragraph 1; figures 1-2; example 1 * | 1 | |
| | ----- | | |
| X | US 6 498 324 B2 (MITSUBISHI HEAVY IND LTD [JP]) 24 December 2002 (2002-12-24) * claims 1,7; figure 1 * | 1 | |
| | ----- | | |
| X | CN 115 528 198 A (VOLKSWAGEN AG) 27 December 2022 (2022-12-27) * claims 1-7; figures 1-4 * | 8-12 | |
| | ----- | | |

**TECHNICAL FIELDS SEARCHED (IPC)**

H01M
B21B

The present search report has been drawn up for all claims

| Place of search | Date of completion of the search | Examiner |
|---|---|---|
| Munich | 3 March 2025 | Forciniti, Marco |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

.................................................................................
& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 24 21 1046

This annex lists the patent family members relating to the patent documents cited in the above-mentioned European search report.
The members are as contained in the European Patent Office EDP file on
The European Patent Office is in no way liable for these particulars which are merely given for the purpose of information.

03-03-2025

| Patent document cited in search report | | Publication date | Patent family member(s) | | Publication date |
|---|---|---|---|---|---|
| EP 4032628 | A1 | 27-07-2022 | CN | 116761682 A | 15-09-2023 |
| | | | EP | 4032628 A1 | 27-07-2022 |
| | | | EP | 4281229 A1 | 29-11-2023 |
| | | | JP | 2023554696 A | 28-12-2023 |
| | | | WO | 2022157312 A1 | 28-07-2022 |
| JP H05192703 | A | 03-08-1993 | JP | 2996013 B2 | 27-12-1999 |
| | | | JP | H05192703 A | 03-08-1993 |
| DE 2743130 | A1 | 29-06-1978 | AT | 345237 B | 11-09-1978 |
| | | | DE | 2743130 A1 | 29-06-1978 |
| | | | FR | 2375920 A1 | 28-07-1978 |
| US 6498324 | B2 | 24-12-2002 | CA | 2358815 A1 | 15-07-2002 |
| | | | CN | 1365864 A | 28-08-2002 |
| | | | EP | 1222973 A2 | 17-07-2002 |
| | | | JP | 2002210510 A | 30-07-2002 |
| | | | KR | 20020061483 A | 24-07-2002 |
| | | | US | 2002092846 A1 | 18-07-2002 |
| CN 115528198 | A | 27-12-2022 | CN | 115528198 A | 27-12-2022 |
| | | | DE | 102021206617 B3 | 08-09-2022 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 8415595 B, Chirico
- US 9756686 B, Dohmeier

- US 5059762 A, Simcock